# EUROPEAN PATENT APPLICATION

(11) **EP 1 855 426 A1**
(43) Date of publication of application: **14.11.2007**
(21) Application number: 06715078.9
(22) Date of filing: 02.03.2006
(51) Int. Cl.: H04L 12/56

(54) **TRANSMISSION CONTROL APPARATUS AND METHOD THEREOF**

(30) Priority: 04.03.2005 JP 2005060062; 04.03.2005 JP 2005060063
(71) Applicant: Hewlett-Packard Development Company, L.P., Houston, TX 77070 (US)
(72) Inventor: ARAKI, Yasuhiro, ashi 3-chome, Suginami-ku, Tokyo 1688585 (JP)
(74) Representative: Exell, Jonathan Mark
(86) International application number: PCT/JP2006/303969
(87) International publication number: WO 2006/093221

(57) **Abstract**

A transmission control apparatus capable of controlling the transmission of actual data from the beginning of the data transmission. Attribute information indicative of the attribute of data to be transmitted is notified by a transmission request source, which requests the transmission of the data, to a transmission request destination prior to the transmission of the data. A transmission control method (policy) for transmitting the data is established by use of a transmission quality that is required for the transmission of the data, which corresponds to the notified attribute information, in accordance with this attribute information. Then, the transmission of the data corresponding to the attribute information is controlled in accordance with the established transmission control method.

## Description

### Technical Field

The present invention relates to a transmission control apparatus for controlling data transmission of a packet and a method therefor.

### Background Art

As an example, Patent Document 1 discloses a method allowing for complementing or expanding a function of a network without changing an existing device or a network structure.
As an example, Patent Document 2 discloses a method of performing quality of service (QoS) control by obtaining information from actual packet transfer.
As an example, Patent Document 3 discloses a method of performing QoS control by using information of a real-time transport protocol (RTP) packet.
As an example, Patent Document 4 discloses a method allowing for extracting a network parameter from a transmitted/received packet and setting a desired network parameter.
Furthermore, as an example, Patent Document 5 discloses a method allowing for recognizing a service type and a traffic type and guaranteeing a communication quality corresponding to those types.
Additionally, as an example, Non-patent Document 1 discloses a tag "qos" for QoS control.
However, none of the methods disclosed in Patent Documents 1 to 5 and Non-patent Document 1 includes disclosure of a method allowing for performing transmission control over data from the starting point of time of data transmission of the actual data.
Patent Document 1: JP 2004-180211
Patent Document 2: JP 2004-135279
Patent Document 3: JP 2003-158543
Patent Document 4: JP 2001-274806
Patent Document 5: JP 2001-298481
Non-patent Document 1: "Integration of Resource Management and SIP", (online), October 2002, Internet Engineering Task Force (IETF), (retrieved on December 21, 2004), Internet (URL: http://www.ietf.org/rfc/rfc3312.txt)

### Disclosure of the Invention

### Problem to be solved by the Invention

The present invention has been made in view of the above-mentioned background, and aims at providing a transmission control apparatus allowing for performing data transmission control from the starting point of the actual data transmission.

### Means for solving the Problem

To attain the above-mentioned object, a transmission control apparatus according to the present invention is a transmission control apparatus for controlling transmission of transmission data intended to be transmitted, attribute information representing an attribute of the transmission data being notified from a transmission request source of the transmission data to be transmitted to a transmission request destination thereof in advance of the transmission of the transmission data, the transmission control apparatus comprising a transmission control mode setting section for setting a transmission control mode for transmitting the transmission data in a transmission quality required for the transmission data corresponding to the attribute information in response to the notified attribute information and a transmission control section for performing transmission control of the transmission data corresponding to the attribute information according to the set transmission control mode.

A transmission control method according to the present invention is a transmission control method of controlling transmission of transmission data intended to be transmitted, attribute information representing an attribute of the transmission data being notified from a transmission request source of the transmission data to be transmitted to a transmission request destination thereof in advance of the transmission of the transmission data, the transmission control method comprising the steps of setting a transmission control mode for transmitting the transmission data in a transmission quality required for the transmission data corresponding to the attribute information in response to the notified attribute information and performing transmission control of the transmission data corresponding to the attribute information according to the set transmission control mode.

### Effect of the Invention

According to the present invention, transmission control is enabled from the start time point of the data transmission of the actual data.

### Brief Description of the Drawings

FIG. 1 shows a structure of a first data transmission system according to a first embodiment of the present invention.
FIG. 2 shows an example of a hardware structure of a computer used as each of nodes shown in FIG. 1.
FIG. 3 shows a structure of a control program that is executed on a router shown in FIG. 1.
FIGS. 4 show an example of a structure of a packet subjected to transmission control, in which FIG. 4(a) shows a structure of the packet, FIG. 4(b) shows a structure of an SIP message within the packet shown in FIG. 4(a), FIG. 4(c) shows an SDP description contained in a message body within the SIP message shown in FIG. 4 (b) at the time of transmission of a request, and FIG. 4 (d) shows an SDP description at the time of response to the request.
FIG. 5 shows a structure of a policy database storing policies representing criteria of transmission quality.
FIG. 6 shows a structure of a management program executed on a policy server shown in FIG. 1.
FIG. 7 shows a structure of an application program executed on each of mobile terminals and an application server shown in FIG. 1.
FIG. 8 is a flowchart showing a transmission control method setting processing (S10) of the router shown in FIG. 1.
FIG. 9 is a first sequence diagram showing an operation (S20) of the first data transmission system shown in FIG. 1.
FIG. 10 is a second sequence diagram showing an operation (S30) of the first data transmission system shown in FIG. 1 in a case where a policy update is not necessary.
FIG. 11 shows a structure of a second data transmission system according to a second embodiment of the present invention.
FIG. 12 shows a structure of a transmission control method setting program executed on a proxy server 26 shown in FIG. 11.
FIG. 13 shows a structure of a transmission control program executed on a router shown in FIG. 11.
FIG. 14 is a flowchart showing a first transmission control method setting processing (S40) of the proxy server shown in FIG. 11.
FIG. 15 is a first sequence diagram showing an operation (S50) of the second data transmission system shown in FIG. 11.
FIG. 16 is a second sequence diagram showing an operation (S60) of the second data transmission system shown in FIG. 11 in a case where a policy update is not necessary.
FIG. 17 is a third sequence diagram showing an operation (S62) of the second data transmission system shown in FIG. 11.
FIG. 18 is a fourth sequence diagram showing an operation (S64) of the second data transmission system shown in FIG. 11.
FIG. 19 is a flowchart showing a second transmission control method setting processing (S66) of the proxy server shown in FIG. 11 (transmission control method setting program; FIG. 12).
FIG. 20 is a fifth sequence diagram showing an operation (S68) of the second data transmission system 2 shown in FIG. 11.
FIG. 21 is a sixth sequence diagram showing an operation (S70) of the second data transmission system 2 shown in FIG. 11.

### Best Mode for carrying out the Invention

### (First Embodiment)

Hereinafter, description will be made of a first embodiment of the present invention.

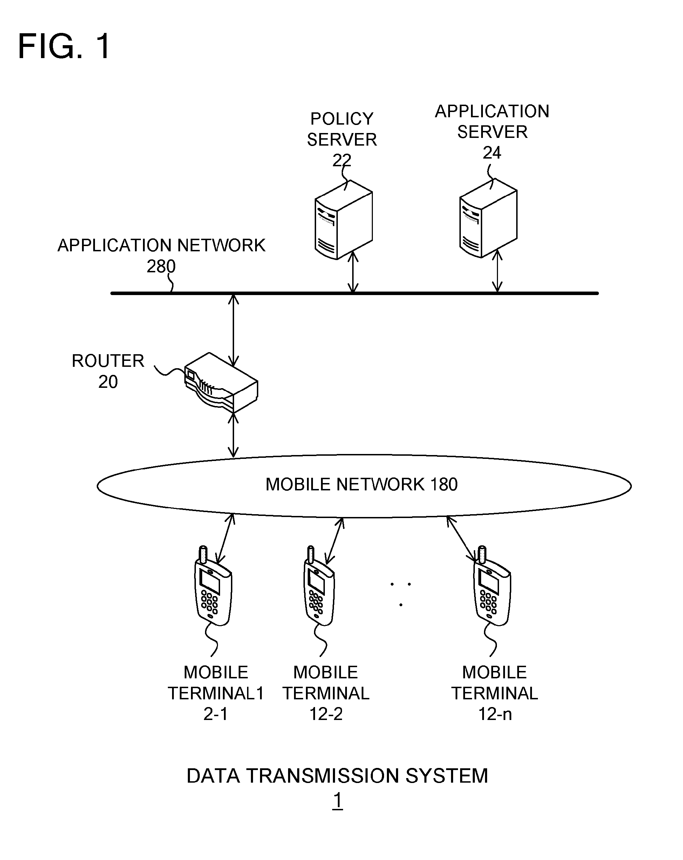

FIG. 1 shows a structure of a first data transmission system 1 according to the present invention.
As shown in FIG. 1, the first data transmission system 1 includes a router 20, a policy server 22, an application server 24, mobile terminals 12-1 to 12-n, an application network 280, and a mobile network 180.
The policy server 22 and the application server 24 are connected to the application network 280 such as a LAN or WAN, and the mobile terminals 12-1 to 12-n are connected to the mobile network 180.
The application network 280 and the mobile network 180 are connected to each other via the router.

With this structure, the first data transmission system 1 applies policy-based QoS control to transmission data that is transmitted between each of the mobile terminals 12-1 to 12-n and the application server 24.
Note that components including those servers will also be generically referred to as "nodes" hereinbelow.
A plurality of components such as the mobile terminals 12-1 to 12-n may be abbreviated simply as, for example, "mobile terminal 12", when reference is not made to a specific one thereof.
In the subsequent figures, substantially the same components and processing are denoted by the same reference symbols.

### (Hardware)

Hereinafter, description will be made of hardware of each node.

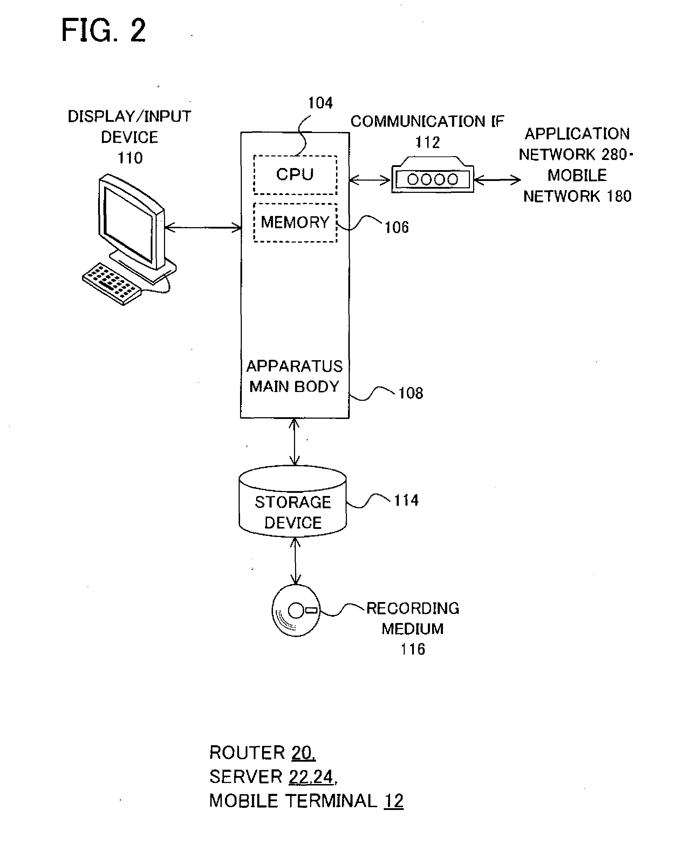

FIG. 2 shows an example of a hardware structure of a computer used as each of the router 20, the policy server 22, the application server 24, and the mobile terminal 12 shown in FIG. 1.
As shown in FIG. 2, the computer of each node includes an apparatus main body 108 including a CPU 104 and a memory 106, a display/input device 110 including a keyboard and a display, a communication interface (IF) 112 for communicating with another node via the application network 280 or the mobile network 180, and a storage device 114 for recording/reproducing data on/from a recording medium 116.
That is, the computer of each node has components necessary for a computer allowing for carrying out information processing based on execution of a program and communicating with another node via a network.

### (Software)

Hereinafter, description will be made of programs executed on the respective nodes and databases that are referenced by those programs.

### (Control Program 200)

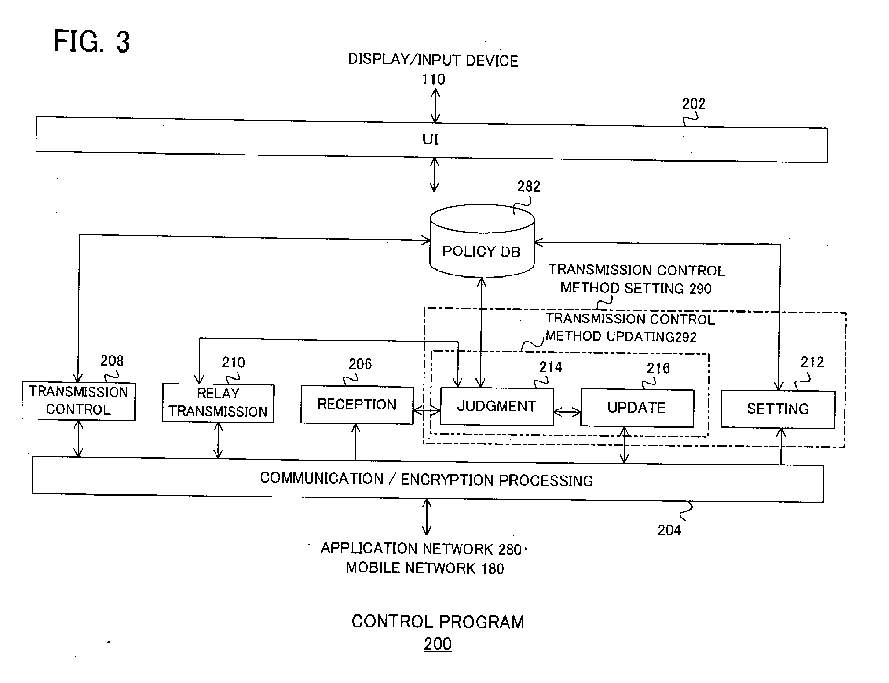

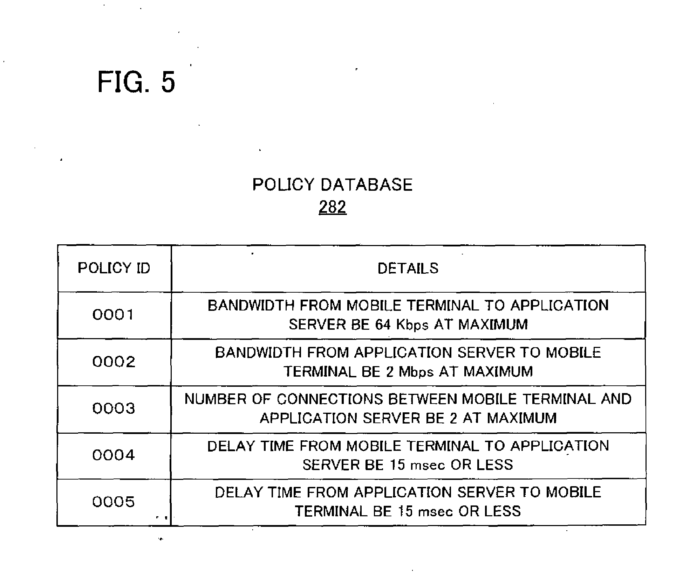

FIG. 3 shows a structure of a control program 200 that is executed on the router 20 shown in FIG. 1.
As shown in FIG. 3, the control program 200 includes a user interface (UI) section 202, a communication/encryption processing section 204, a reception section 206, a transmission control method setting section 290, a transmission control section 208, a relay transmission section 210, and a policy database (DB) 282 (FIG. 5) .
The transmission control method setting section 290 includes a transmission control method updating section 292 and a setting section 212.
The transmission control method updating section 292 includes a judgment section 214 and an update section 216.

With those components, the control program 200 updates a policy representing a criterion of transmission quality and performs transmission control based on the resultant policy prior to transmission of the transmission data that is transmitted/received between each of the mobile terminals 12-1 to 12-n and the application server 24.
That is, the control program 200 performs the policy-based QoS control.
For example, the control program 200 is supplied to the router 20 through the recording medium 116 (FIG. 2), loaded onto the memory 106 (FIG. 2), and executed on an OS (not shown) running on the router 20 by concretely using the hardware (the same applies to each of the following programs).

In the control program 200, the UI section 202 receives an operation performed by a user on the display/input device 110 (FIG. 2), and produces a corresponding output with respect to each component of the control program 200.
The control program 200 follows the received operation to control an operation of each component of the control program 200.
The UI section 202 displays on the display/input device 110 or stores in the storage device 114 information/data created by each component of the control program 200 and details of processing of each component.

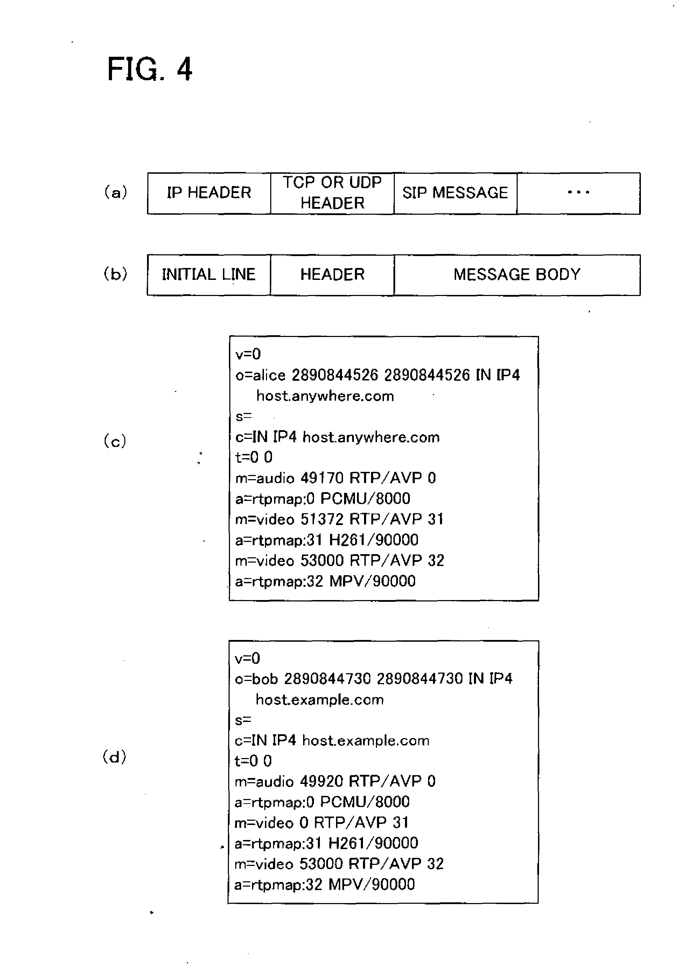

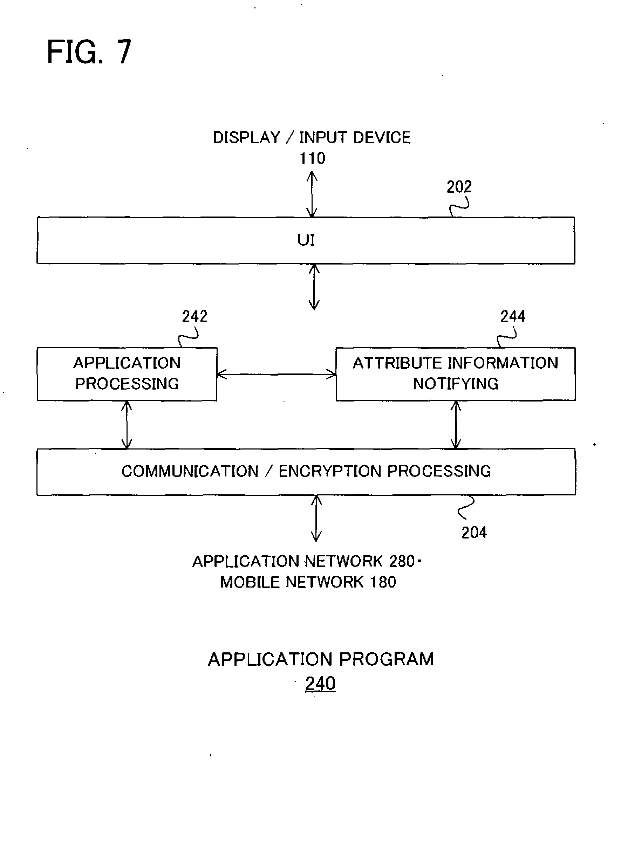

The communication/encryption processing section 204 performs communication processing necessary for communication with each node, authentication processing therewith, and encryption processing for preventing tampering of the information/data transmitted to/from each node.
The reception section 206 receives a packet which is transmitted prior to the transmission of the transmission data from the mobile terminal 12 or the application server 24 (application program 240; described later with reference to FIG. 7) and which contains attribute information (described later with reference to FIGS. 4 (a) to 4(d)) representing an attribute of the transmission data, and outputs the packet to the transmission control method setting section 290.

FIGS. 4 show an example of a structure of a packet for setting the transmission control performed by the control program 200. FIG. 4(a) shows a structure of the packet. FIG. 4(b) shows a structure of a session initiation protocol (SIP) message within the packet shown in FIG. 4 (a). FIG. 4 (c) shows a session description protocol (SDP) description contained in a message body within the SIP message shown in FIG. 4(b) at the time of transmission of a request. FIG. 4 (d) shows an SDP description at the time of response to the request.
As shown in FIG. 4(a), the packet contains an IP header, a TCP or UDP header (naturally, another transport layer protocol such as an SCTP may be used), the SIP message, and other optional parts.
Prior to the transmission of the transmission data between any one of the mobile terminals 12 and the application server 24, a message containing the SIP message is transmitted and received by those nodes.

As shown in FIG. 4(b), the SIP message shown in FIG. 4(a) contains an initial line, a header, and a message body.
The message body contains information described in the SDP defined in RFC3261, and the SDP contains attribute information.

As shown in FIG. 4(c), the message body shown in FIG. 4(b) contains the SDP description.
The SDP defines the attribute information including a session description, a date/time description, and a media description.
In this case, "v" indicates a protocol version.
"o" indicates an owner or creator and a session identifier, and it is exemplified that the owner is "alice" and a domain is "host.anywhere.com".
"c" indicates connection information, fand it is exemplified that the owner is "alice" and the domain is "host.anywhere.com" in an IPv4.
"t" indicates a start time and an end time of a session. Note that the time designated as "0" indicates that the time is not particularly set or the session is persistent.
"m" indicates a media name, a transport address or the like, and it is exemplified that 3 connections are required the media names and transport addresses of which are respectively "audio" and "49170", "video" and "51372", and "video" and "53000".
"a" indicates 0 or more media attribute lines, and one attribute for each of the three media indicated by the above-mentioned type "m" is exemplified.

The SDP description shown in FIG. 4 (c) is transmitted from the mobile terminal 12 to the application server 24 prior to the transmission of the transmission data, and it is exemplified that the user "alice" is requesting transmission of an audio data item and 2 video data items.
The transmission of each item of audio data and video data requires establishment of a connection.
That is, the SDP description indicates that the three connections, which are a connection for transmitting/receiving the audio data item, a connection for transmitting/receiving a first video data item, and a connection for transmitting/receiving a second video data item, are being requested by the user "alice".

The SDP description shown in FIG. 4(d) is the SDP description at the time of response to the SDP description shown in FIG. 4(c), which is described in the same manner as the SDP description shown in FIG. 4(c), and is transmitted from the application server 24 to the mobile terminal 12.
In the SDP description shown in FIG. 4 (d), the type "o" indicates that the owner is "bob" and the domain is "host. example. com", and the type "c" indicates that the domain is "host.example.com" in the IPv4.

The type "m" indicates that 3 connections whose media names and transport addresses are "audio" and "49920", "video" and "0", and "video" and "53000", respectively, are permitted.
In this case, the first video data itemhas the transport address designated as "0". Thus, the SDP description indicates that transmission/reception of the first video data item is rejected.
Accordingly, the transmission data following those SDP descriptions is transmitted while containing the audio data item and the second video date item instead of containing the first video date item.

Based on the attribute information contained in the received packet, the transmission control method setting section 290 (FIG. 3) sets a method of the transmission control, that is, a mode of the transmission control (policy stored in the policy DB 282; throughout this application, referred to as "transmission control method") for transmitting the transmission data in a transmission quality required for transmission data corresponding to the attribute information.
For example, the transmission control method setting section 290 receives the packet containing the attribute information shown in FIG. 4(c) in a case where there is set a policy that specifies that "the maximum number of connections between the mobile terminal 12 and the application server 24 is two".
In this case, for the connection for the audio data item and the two connections for the two video data items, the transmission control method setting section 290 sets the policy so that the maximum number of connections that can be used is set to at least three.

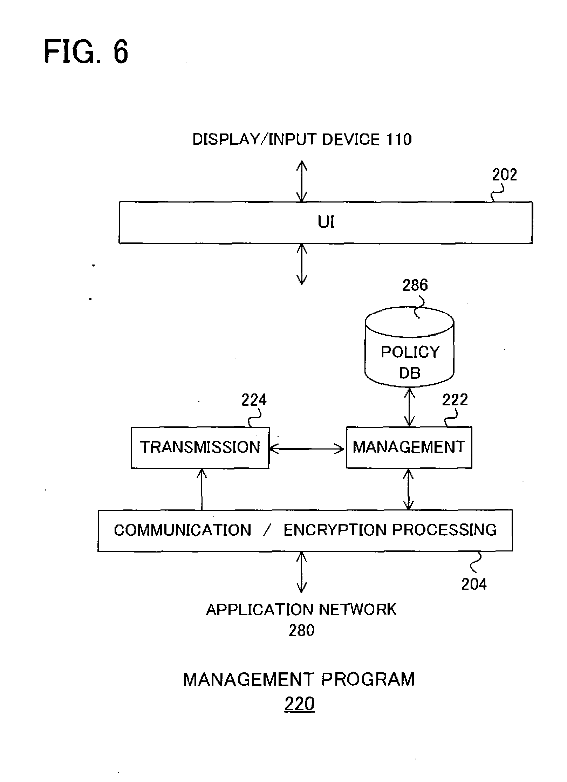

FIG. 5 shows a structure of the policy DB 282 storing policies representing criteria of transmission quality.
As shown in FIG. 5, the policy DB 282 contains a policy identifier (ID) and details of the policy.
The policy DB 282 stores at least a part of data stored in a policy DB 286 used by a management program 220 (described later with reference to FIG. 6) on the policy server 22.
That is, the policy DB 282 is a subset of the policy DB 286 on the policy server 22.
The policy ID is an identifier for managing a policy to be set, the policy being identified uniquely by the policy ID.

The policy represents a criterion of transmission quality, and control of data transmission is performed based on, for example, the policy including a bandwidth, the number of connections, and a delay time.
For example, a first policy specifies that the bandwidth be 64 kbps at maximum in data transmission from the mobile terminal 12 to the application server 24, while a second policy specifies that the bandwidth be 2 Mbps at maximum in data transmission from the application server 24 to the mobile terminal 12.
The policy DB 282 stores those policies in the storage device 114 (FIG. 2) or the memory 106 of the router 20 on which the control program 200 runs.

Note that a group of policies as shown in FIG. 5 including the above-mentioned policies is set for each individual session between the mobile terminal and the application server.
That is, the policies represented by policy IDs 0001 to 0005 shown in FIG. 5 make a group of policies for a specific session, and another group of policies is prepared for another session.
However, many sessions may often use groups of policies having almost the same details in actuality, so only one policy is prepared in the policy DB 282 for the policies having the same details, and the shared policy is referenced by a plurality of sessions.
Accordingly, even if the number of sessions becomes extremely large, the number of policies within the policy DB 282 can be suppressed to a remarkably low level.

To be specific, upon the start of a session, the session is set to reference a group of policies represented by an initial value (default value).
In a case where a change (an update) is to be performed on one of the policies for the session (for example, a policy specifying that "the bandwidth is 64 kbps at maximum"), if a policy after the change (for example, policy specifying that "the bandwidth is 512 kbps at maximum") already exists in the policy DB 282, a reference target is changed from the policy before the change to the existing policy after the change.
If the policy after the change does not exist in the policy DB 282, such a policy is newly created, or such a policy registered in advance in another place is copied to the policy DB 282, and the reference target is changed over to the new policy.
The change can naturally be realized also by directly rewriting the policy as shown in FIG. 5 within the policy DB 282. However, to cope with many sessions in particular, it is more efficient to adopt the above-mentioned structure/operation.
It should be noted that the phrase "updating a policy" used in the following description actually indicates that the above-mentioned operation of changing over the policy to be referenced by the session is internally performed.

Based on the received attribute information, the transmission control method setting section 290 (FIG. 3) updates the transmission control method (policy) for transmitting the transmission data in the transmission quality required for the transmission data corresponding to the attribute information.
The judgment section 214 references the attribute information contained in a packet outputted from the reception section 206 to determine whether or not the transmission data can be transmitted in the required transmission quality according to all the policies that are stored in the policy DB 282 and correspond to the session.

If the judgment section 214 determines that the transmission data is to be transmitted in the required transmission quality with the current policy settings without a change, the judgment section 214 outputs the received packet containing the attribute information to the relay transmission section 210, and causes the relay transmission section 210 to transmit the packet to a transmission request destination.
Alternatively, the judgment section 214 requests the update section 216 to update the policy unless the judgment section 214 determines that the transmission data is to be transmitted in the required transmission quality.

For example, in a case of receiving the packet containing the attribute information shown in FIG. 4(c), the packet indicates that a transmission source is requesting the total of 3 connections, which are the connection for the audio data item and the 2 connections for the 2 video data items.
Meanwhile, the policy specifying that "the number of connections between the mobile terminal 12 and the application server 24 be 2 at maximum" is set as the policy ID 0003 in the policy DB 282 shown in FIG. 5.
Therefore, the judgment section 214 determines that the transmission data cannot be transmitted in the required transmission quality.

Unless the judgment section 214 determines that the transmission data can be transmitted in the required transmission quality, the update section 216 updates the policy stored in the policy DB 282 so that the transmission data can be transmitted in the transmission quality required for the transmission data.
To be specific, the update section 216 requests the policy server 22 (described later with reference to FIG. 6) to update the policy.

The update request is made by using, for example, common open policy service usage for policy provisioning (COPS-PR) defined in RFC3084.
For example, in the above-mentioned example of FIGS. 4 (c) and 5, the number of requested connections is 3, while the maximum number of connections set in the policy is two. Therefore, the update section 216 requests the policy server 22 to increase the maximum number of connections.
The setting section 212 receives the policy updated by the policy server 22, and sets the received policy in the policy DB 282.

When the judgment section 214 determines that the transmission data can be transmitted in the required transmission quality, the relay transmission section 210 relays and transmits the packet containing the attribute information to the transmission request destination.
In this case, the relay transmission section 210 relays and transmits the packet.
If the data transmission cannot be performed as specified in the SDP description even after the update section 216 has requested the policy server 22 to update the policy, the relay transmission section 210 does not relay or transmit the packet containing the SDP description, and instead returns the same packet to the transmission source as an error or discards the packet.

Alternatively, the relay transmission section 210 may transmit the packet containing the SDP description as it is to the request destination instead of returning or discarding the packet.
In this case, the transmission request destination may assign the requested resources and the like within a permitted range even if all the requests that are contained in the SDP description cannot be satisfied, and return a result thereof to the request source.
The SDP description of FIG. 4(d) indicates that only two connections have been assigned among the requested three connections, and that assignment of the remaining one connection (media name of video and transport address of 51372) has been unsuccessful.
In such a case, the request source can determine from the result of the assignment whether or not the data transmission is to be discontinued because necessary data transmission cannot be performed or whether or not the data transmission is to be continued even if the data is insufficient.

The transmission control section 208 performs the transmission control for the transmission data corresponding to the attribute information according to the policies set in the policy DB 282.
To be more specific, the transmission control section 208 receives from the communication/encryption processing section 204 a packet which contains audio data, video data, or the like and is transmitted between the mobile terminal 12 and the application server 24 subsequent to the transmission of the packet containing the attribute information. Then, the transmission control section 208 controls the transmission of the received packet according to the policies.
For example, the transmission control section 208 controls a transmission timing of the packet so as to maintain a bandwidth of 64 kbps at maximum in a case where the data is transmitted from the mobile terminal 12 to the application server 24, and controls the transmission timing so as to maintain a bandwidth of 2 Mbps at maximum in a case where the data is transmitted from the application server 24 to the mobile terminal 12.
That is, the transmission control section 208 functions as policy enforcement point (PEP).

### (Management Program 220)

FIG. 6 shows a structure of the management program 220 executed on the policy server 22 shown in FIG. 1.
As shown in FIG. 6, the management program 220 includes the user interface (UI) section 202, the communication/encryption processing section 204, a management section 222, a transmission section 224, and the policy DB 286.
With those components, the management program 220 controls policies and makes a judgment in response to the policy update request transmitted from the control program 200 (FIG. 3).
To be more specific, the management program 220 functions as a policy decision point (PDP).

The policy DB 286 stores all the policies that represent the criteria of transmission quality.
The policy DB 286 is realized by storing those policies in the storage device 114 or the memory 106 of the policy server 22 on which the management program 220 runs.

The management section 222 manages the policies stored in the policy DB 286, receives the policy update request from the router 20 (control program 200), and decides whether or not to update the policy in response to the request.
For example, if the policy specifying that "the number of connections between the mobile terminal and the application server be two at maximum" is set, and if the router 20 requests for the increase in the maximum number of connections, the management section 222 decides whether or not to update the policy.
In this case, the management section 222 decides whether to perform such an update as increase in the number of connections for a predetermined time period as a time limit or the like so as to meet the request, or to, determining that there is no room for increase, update the number to a value that does not satisfy the request or make no update.

If the management section 222 decides to update the policy, the management section 222 updates the policy DB 286 and orders the transmission section 224 to transmit the updated policy to the transmission source (router 20) of the policy update request.
The management section 222 transmits the updated policy to the transmission source of the policy update request, that is, the router 20, via the transmission section 224.

(Application Program 240)
FIG. 7 shows a structure of the applicationprogram240 executed on each of the mobile terminals 12-1 to 12-n and the application server 24 shown in FIG. 1.
As shown in FIG. 7, the application program 240 includes the UI section 202, the communication/encryption processing section 204, an application processing section 242, and an attribute information notifying section 244.
With those components, the application program 240 transmits data involved in an application, such as an online game, online shopping, or a business support, which is processed between any one of the mobile terminals 12-1 to 12-n and the application server 24, and prior to the transmission of the transmission data, sends a notification of the attribute information of the data to be transmitted.

The application processing section 242 performs application processing by receiving an input from the display/input device 110 (FIG. 2) and outputting video data or audio data to the display/input device 110.
In addition, prior to the application processing, the application processing section 242 causes the attribute information notifying section 244 to send the notification of the attribute information of the data to be transmitted.

The attribute information notifying section 244 previously notifies the transmission request destination of the attribute information (FIG. 4(c)) representing the attribute of the transmission data to be transmitted for the application processing.
Further, under control of the application processing section 242, the communication/encryption processing section 204 transmits the transmission data whose attribute information has been notified.
The attribute information is thus notified by the attribute information notifying section 244, so the data transmission for the application processing can be performed after being subjected to the transmission control based on the attribute information.

### (Transmission Control Method Setting Processing of Control Program 200)

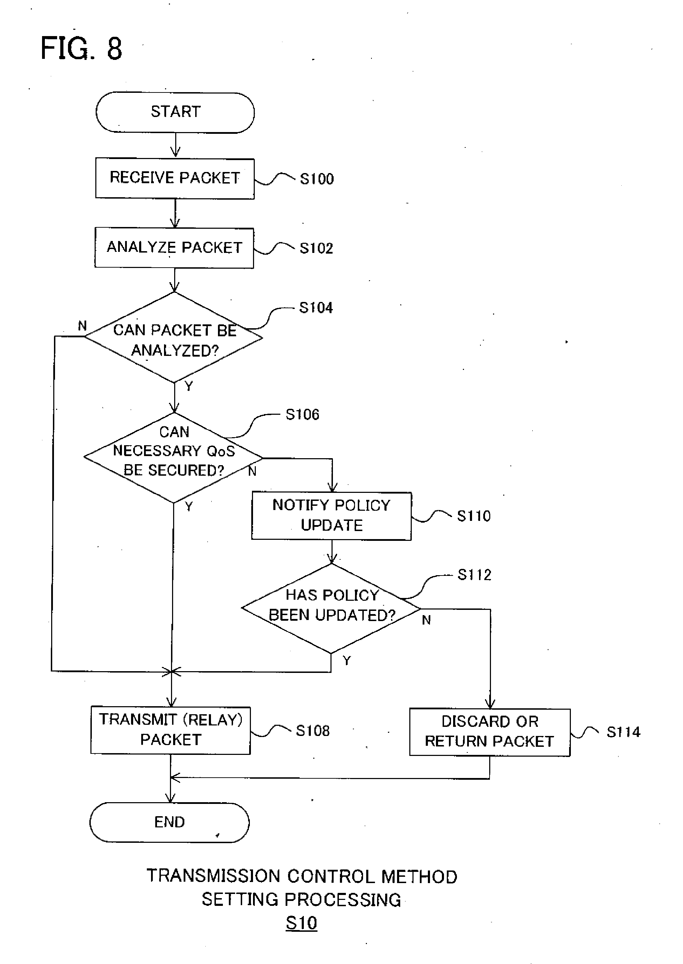

FIG. 8 is a flowchart showing a transmission control method setting processing (S10) of the router 20 shown in FIG. 1 (control program 200; FIG. 3).
As shown in FIG. 8, in Step 100 (S100), the reception section 206 receives a packet containing attribute information which is transmitted prior to data transmission performed between the mobile terminal 12 and the application server 24, and outputs the packet to the judgment section 214 of the transmission control method setting section 290.

In Step 102 (S102), the judgment section 214 references an SDP description contained in the packet to analyze the attribute information of the transmission data.
In Step 104 (S104), the judgment section 214 determines whether or not the packet can be analyzed, that is, whether or not the packet contains the attribute information that can be analyzed.
If the packet can be analyzed, the control program 200 advances to Step S106, and if the packet cannot be analyzed, the control program 200 advances to Step S108.

In Step 106 (S106), the judgment section 214 references the policies stored in the policy DB 282 to determine whether or not the transmission data is to be transmitted in a required transmission quality.
If the transmission data is to be transmitted in the required transmission quality, the control program 200 advances to Step S108, and if the transmission data is not to be transmitted in the required transmission quality, the control program 200 advances to Step S110.

In Step 108 (S108), the judgment section 214 transmits the packet to the relay transmission section 210, and the relay transmission section 210 relays and transmits the packet to the transmission request destination. Then, the control program 200 ends the processing.
In Step 110 (S110), the judgment section 214 requests the update section 216 to update the policy.
Upon reception of the request, the update section 216 requests the policy server 22 to update the policy so that the transmission data can be transmitted in the required transmission quality.

Note that there can be a case where the policy DB 282 within the router 20 includes no policy defining the required transmission quality.
There is a policy set for an operation performed in this case.
Following is an example of such a policy.
(A) The router 20 requests a corresponding policy from the policy server 22.
(B) The request is discarded without a further request for a new policy from the policy server 22.
(C) Transfer is performed without control on the transmission quality.

In Step 112 (S112), the judgment section 214 determines whether or not the policy has been changed to meet the request by the policy server 22.
If the policy has been changed to meet the request, the setting section 212 receives the updated policy and sets the policy in the policy DB 282. Then, the control program 200 advances to Step S108 .
If there is no policy update, or if the policy has been updated only to fail to meet the request, the control program 200 advances to Step S114.

In Step 114 (S114), the judgment section 214 causes the relay transmission section 210 to return the same packet to the transmission source without transmitting the packet or to discard the packet, and ends the data transmission.
Accordingly, the control program 200 can set the policy so that the transmission data can be transmitted in the required transmission quality prior to the transmission of the transmission data.

### (Operation of First Data Transmission System 1)

First, description will be made of an operation of the first data transmission system 1 in the case of performing the policy update.

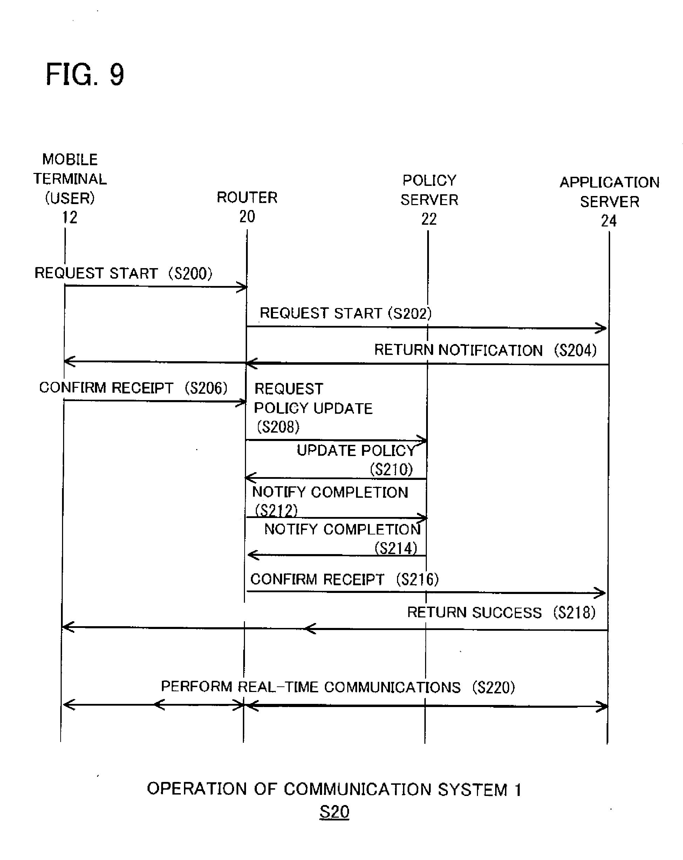

FIG. 9 is a first sequence diagram showing an operation (S20) of the first data transmission system 1 shown in FIG. 1.
As shown in FIG. 9, in Step 200 (S200), a user who performs application processing uses the mobile terminal 12 to request the application server 24, which serves as a provider of an application service, to start the application processing.
The mobile terminal 12 transmits a packet containing an "INVITE" request described in the SIP with the application server 24 designated as the transmission request destination.
The router 20, which is arranged between the mobile terminal 12 and the application server 24, receives the packet. At this time, the packet sent out from the mobile terminal 12 contains the above-mentioned SDP description. Therefore, at this stage, the router 30 acquires information necessary for judgment as to whether or not to request a policy change in order to start the application processing.
It should be noted that the acquiring of the information for the judgment at this time point is not only for the first data transmission system 1 described herein, but also for other systems which will be described later.

In Step 202 (S202), the router 20 transmits the packet to the application server 24 as the transmission request destination.
The application server 24 receives the relayed packet.
In Step 204 (S204), the application server 24 transmits a notification response (for example, a response code "183" in the SIP) to the mobile terminal 12. A packet containing the notification response is relayed by the router 20 and received by the mobile terminal 12.

In Step 206 (S206), the mobile terminal 12 transmits a packet containing "PRACK" (RFC3262) corresponding to a receipt confirmation with the application server 24 designated as the transmission request destination, and the router 20 receives the packet.
In Step 208 (S208), the router 20 performs the transmission control method setting processing (FIG. 8; S10), and if determining that the policy needs an update, requests the policy server 22 to update the policy.
Note that, as described above, the router 20 acquires the information for the judgment as to whether or not the policy update is necessary at the time point of receiving the request for the start in Step 200 (S200). Therefore, Step 208 does not need to wait for the reception in Step 206.
Accordingly, this may be started, for example, at the time point of receiving the notification response in Step 204, or can be started in Step 200.
Note that more information can be referenced upon the judgment at a later time point. Therefore, to implement the system, it should be decided which steps the judgment and the update request are to be made in, based on various requirements and constraints for the system.
Further, many SIP system implementations do not issue "PRACK" (Step 206), but even in such a case, the present invention can naturally be applied thereto without a change.

In Step 210 (S210), the policy server 22 decides whether or not to update the policy so as to satisfy the transmission quality, and transmits the updated policy to the router 20.
In Step 212 (S212), the router 20 stores the transmitted policy in the policy DB 282.
The router 20 updates, for example, the policy specifying that "the number of connections between the mobile terminal and the application server be two at maximum" into a policy specifying that "the number of connections between the mobile terminal and the application server is five at maximum".
The router 20 transmits to the policy server 22 a completion notification indicating that the updated policy has been stored.

In Step 214 (S214), the policy server 22 transmits to the router 20 a completion notification indicating that the processing with respect to the policy update request is complete.
Note that Steps S208 to S214 are performed between the router 20 and the policy server 22 by using, for example, COPS-PR.

In Step 216 (S216), the router 20 transmits the packet containing the receipt confirmation received from the mobile terminal 12 in Step S206 to the application server 24 as the transmission request destination of the packet.
In Step 218 (S218), the application server 24 transmits the packet containing a success response to the mobile terminal 12.
To be more specific, the application server 24 transmits a success response to "PRACK" (response code "2xx (the 200s)") and a success response to "INVITE".

In Step 220 (S220), the transmission of the transmission data is performed between the mobile terminal 12 and the application server 24 via the router 20, and real-time communications for the application processing are performed in the required transmission quality.
Accordingly, the user can receive the application service including audio data and video data from the application server 24 in a predetermined transmission quality from the start time point of the real-time communications.

Next, description will be made of an operation of the first data transmission system 1 in the case where the policy update is not necessary.

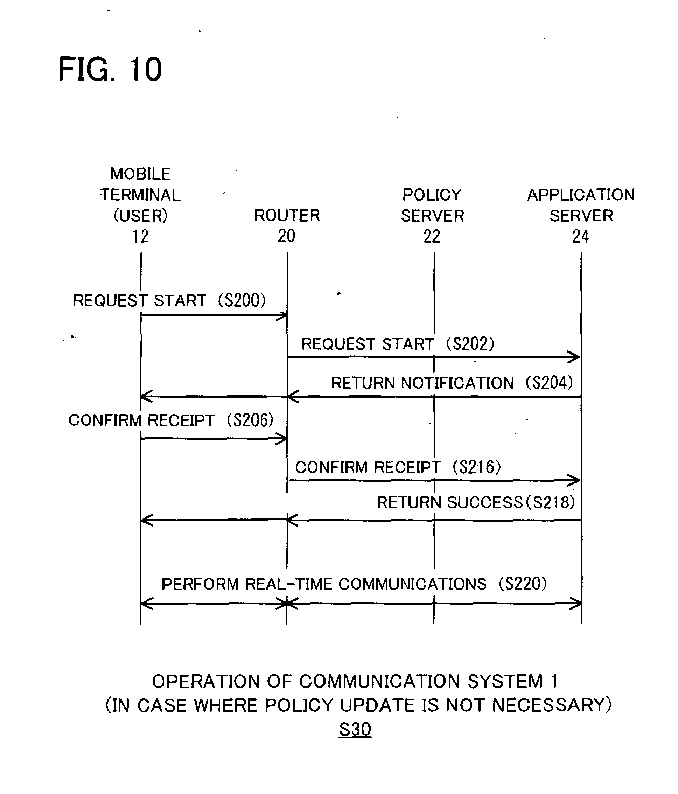

FIG. 10 is a sequence diagram showing an operation (S30) of the first data transmission system 1 shown in FIG. 1 in the case where the policy update is not necessary.
As shown in FIG. 10, the router 20 receives the packet containing the receipt confirmation from the mobile terminal 12 in Step 206 (S206), and then performs the transmission control method setting processing (FIG. 8; S10). In a case where it is determined resultingly that a necessary QoS can be secured without a policy update, Steps S208 to S214 (FIG. 9; S20) are not performed.

As described above, the QoS control is performed based on the attribute information contained in the packet transmitted prior to the transmission data, and can therefore be performed at higher speed and with fewer resources than a method involving analysis of the entire packet.
In addition, the policy is set based on the attribute information, so it is possible to transmit the transmission data in the required transmission quality from the transmission start time point of the transmission data.
The attribute information contained in the packet is used for the QoS control, so no special tag other than that used in the attribute information is necessary for the QoS control.

In addition, the attribute information to be used is transmitted prior to the data transmission, so the QoS control can be performed effectively from the start point of the data transmission in a case where the data transmission not only continues for a long time period but also ends in a short time period.
Further, even in a case where a plurality of connections for audio data, video data, and the like are needed for the data transmission between the mobile terminal 12 and the application server 24, the effective data transmission can be performed for each connection owing to the attribute information transmittedprior to the data transmission.

### (Second Embodiment)

Next, description will be made of a second embodiment of the present invention.

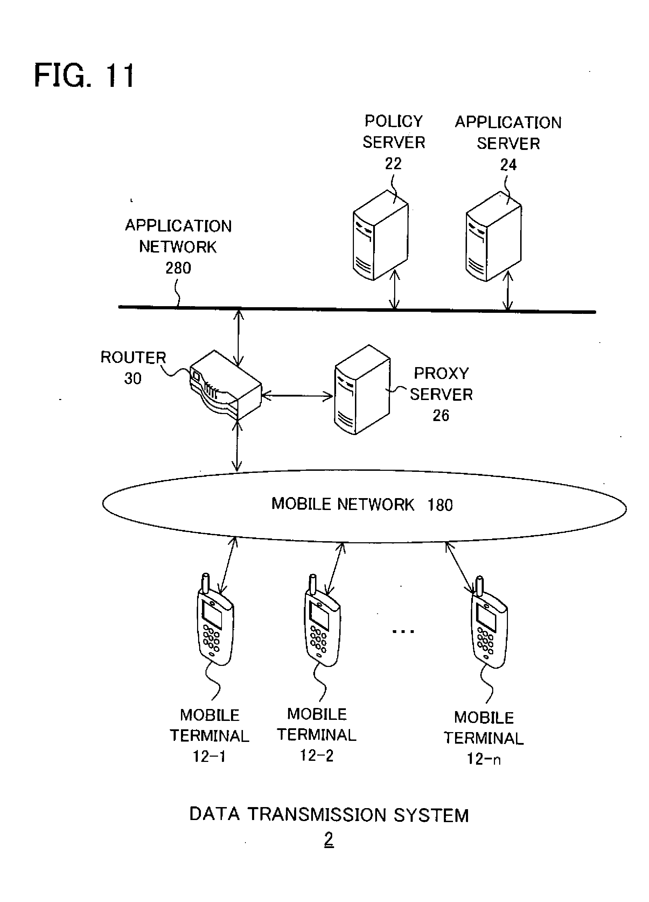

FIG. 11 shows a structure of a second data transmission system 2 according to the present invention.
As shown in FIG. 11, the second data transmission system 2 includes a router 30 (transmission control means), the policy server 22, the application server 24, the proxy server 26 (transmission control method setting means), and the mobile terminals 12-1 to 12-n, which are connected with one another.
The policy server 22 and the application server 24 are connected to the router 30 via the application network 280 such as a LAN or WAN, and the proxy server 26 is connected directly to the router 30.
Note that the proxy server 26 may not necessarily be connected directly to the router 30, and may be connected to the application network 280 or may be connected to the router 30 via a network (not shown) on a mobile network 180 side.

In the first data transmission system 1 shown as the first embodiment, the router 20 functions as a transmission control section and a transmission control mode setting section, while in the second embodiment, the router 30 functions as the transmission control section and the proxy server 26 functions as the transmission control mode setting section.
Further, in the first embodiment, the router 20 receives and relays the packet containing the attribute information as the transmission control mode setting section, while in the second embodiment, the proxy server 26 captures and transparently transmits the packet containing the attribute information.

### (Transmission Control Method Setting Program 260)

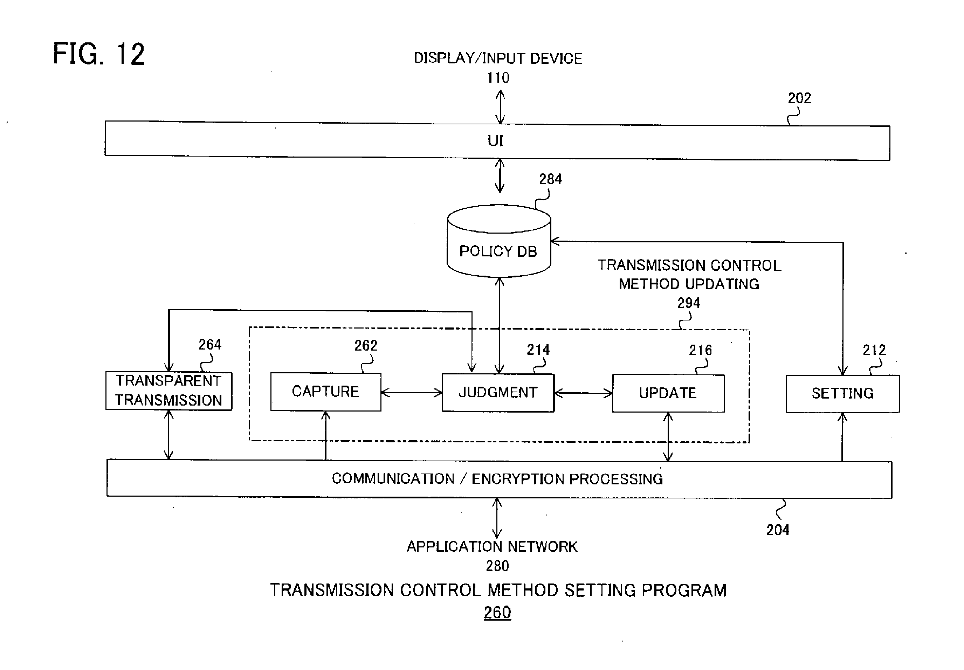

FIG. 12 shows a structure of a transmission control method setting program 260 executed on a proxy server 26 shown in FIG. 11.
As shown in FIG. 12, the transmission control method setting program 260 includes the UI section 202, the communication/encryption processing section 204, a transmission control method updating section 294, the setting section 212, a transparent transmission section 264, and a policy DB 284. The transmission control method updating section 294 includes a capture section 262, the judgment section 214, and the update section 216.

With those components, based on attribute information notified prior to transmission of transmission data that is transmitted/received between each of the mobile terminals 12-1 to 12-n and the application server 24, the transmission control method setting program 260 sets a transmission control method (policy representing a criterion of transmission quality) for transmitting the transmission data in a transmission quality required for the transmission data corresponding to the attribute information.
The policy DB 284 stores at least a part of the data stored in the policy DB 286 used by the management program 220 on the policy server 22.
That is, the policy DB 284 is a subset of the policy DB 286 on the policy server 22.
The capture section 262 captures a packet containing attribute information which is transmitted via the application network 280 prior to the transmission of the transmission data from the mobile terminal 12 or the application server 24, and transmits the packet to the judgment section 214.

When the judgment section 214 determines that the transmission data can be transmitted in the required transmission quality, the transparent transmission section 264 transparently transmits the packet containing the attribute information to a transmission request destination.
In this case, the transparent transmission section 264 relays the packet without a change.
If the data transmission cannot be performed as specified in the SDP description even after the update section 216 has requested the policy server 22 to update the policy, the transparent transmission section 264 does not transparently transmit the packet, and instead returns the same packet to the transmission source as an error or discards the packet.
Alternatively, as has already been described in the first embodiment, such a measure may be taken as to transmit the packet to the request destination, assign the requested resources and the like within a permitted range at the request destination, return a result thereof to the request source, and leave a subsequent judgment to the request source.

### (Transmission Control Program 300)

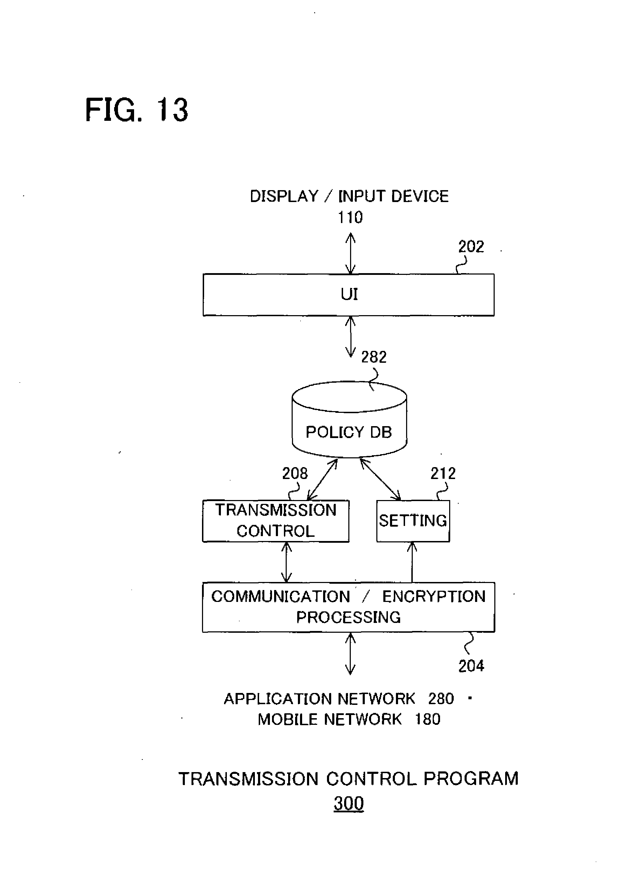

FIG. 13 shows a structure of a transmission control program 300 executed on the router 30 shown in FIG. 11.
As shown in FIG. 13, the transmission control program 300 includes the UI section 202, the communication/encryption processing section 204, the transmission control section 208, the setting section 212, and the policy DB 282.

With those components, according to the set policies, the transmission control program 300 performs the transmission control for the transmission data which corresponds to the attribute information and which is transmitted/received between each of the mobile terminals 12-1 to 12-n and the application server 24.
The policy DB 282 stores at least a part of the data which stored in the policy DB 284 by the transmission control method setting program 260 on the proxy server 26.
That is, the policy DB 284 is a subset of the policy DB 284 on the proxy server 26.

### (Transmission Control Method Setting Processing of Transmission Control Method Setting Program 260)

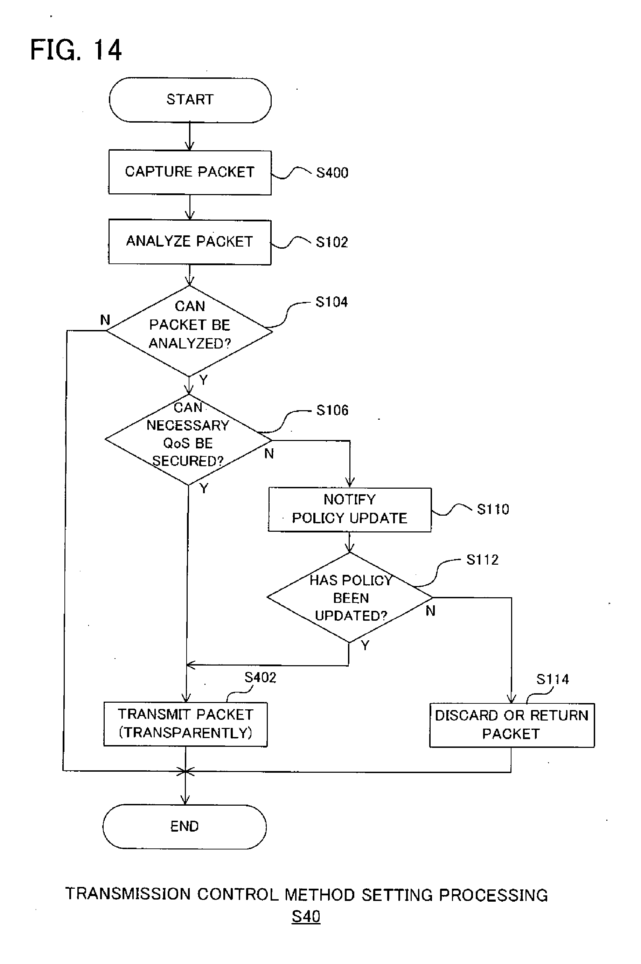

FIG. 14 is a flowchart showing a first transmission control method setting processing (S40) of the proxy server 26 (transmission control method setting program 260; FIG. 12) shown in FIG. 11.
The processing S40 shown in FIG. 14 is different from the processing S10 shown in FIG. 9 in that Steps S100 and S108 of the processing S10 are replaced by Steps S400 and S402 in the processing S40, respectively, and accordingly the order of steps is changed.
As shown in FIG. 14, in Step 400 (S400), the capture section 262 captures the packet containing the attribute information which is transmitted via the application network 280 prior to the data transmission performed between the mobile terminal 12 and the application server 24, and outputs the packet to the judgment section 214.
In Step 402 (S402), the judgment section 214 outputs the packet to the transparent transmission section 264, and the transparent transmission section 264 transparently transmits the packet to the transmission request destination. Then, the transmission control method setting program 260 ends the processing.

### (Operation of Second Data Transmission System 2)

First, description will be made of an operation of the second data transmission system 2 in the case of performing the policy update.

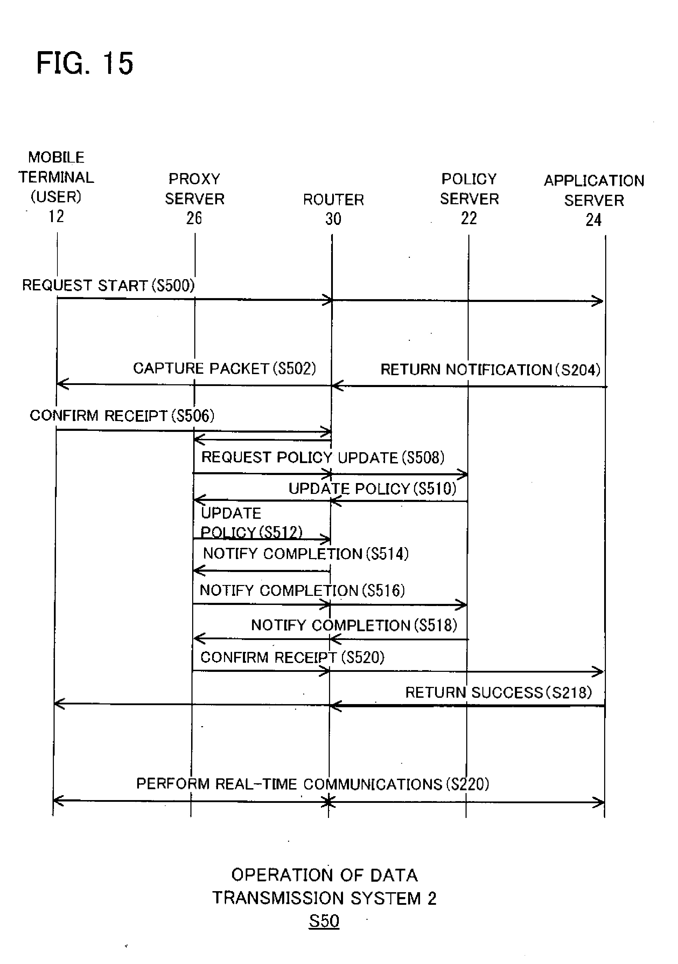

FIG. 15 is a first sequence diagram showing an operation (S50) of the second data transmission system 2 shown in FIG. 11.
As shown in FIG. 15, in Step 500 (S500), a user who performs application processing uses the mobile terminal 12 to request the application server 24, which serves as a provider of an application service, to start the application processing.
The mobile terminal 12 transmits a packet containing an "INVITE" request described in the SIP with the application server 24 designated as the transmission request destination.
In Step 502 (S502), the proxy server 26 uses the router 30 to capture, that is, to tap, a packet which is transmitted via the application network 280 and contains an "INVITE" request.
That is, the router 30 does not affect original transmission of the packet, but creates a copy thereof and supplies the copy to the proxy server 26 to perform the following analysis and the like.
Note that as an embodiment of a proxy operation, instead of a parallel operation involving "dividing a flow" of the packet as described above, such an operation may also be performed as to temporarily bypass the packet to perform a necessary analysis (in some cases, a modification of packet contents or the like) and return the packet to an initial path. In this application, such a serial operation is called "capturing" as well.

In Step 204 (S204), the application server 24 transmits a notification response to the mobile terminal 12. A packet containing the notification response is relayed by the router 20 and received by the mobile terminal 12.
In Step 506 (S506), the mobile terminal 12 transmits a packet containing a "PRACK" code corresponding to a receipt confirmation with the application server 24 designated as the transmission request destination, and the proxy server 26 receives the packet.
With reception of the packet containing a "PRACK" code as a trigger, the proxy server 26 executes Step S508 and the subsequent steps.

In Step 508 (S508), the proxy server 26 performs the transmission control method setting processing (FIG. 14; S40), and if determining that the policy needs an update, requests the policy server 22 to update the policy.

In Step 510 (S510), the policy server 22 decides whether or not to update the policy so as to satisfy the transmission quality, and transmits the updated policy to the proxy server 26.
In Step 512 (S512), the proxy server 26 stores the transmitted updated policy in the policy DB 284.
Further, the proxy server 26 transmits the updated policy to the router 30.

In Step 514 (S514), the router 30 sets the transmitted updated policy in the policy DB 282.
The router 30 transmits to the proxy server 26 a completion notification indicating that the updated policy has been stored.
In Step 516 (S516), the proxy server 26 transmits to the policy server 22 a completion notification indicating that the policy of the proxy server 26 and the router 30 has been updated.
In Step 518 (S518), the policy server 22 transmits to the proxy server 26 a completion notification indicating that the processing with respect to the policy update request is complete.

Note that Steps S508 to S518 are performed among the proxy server 26, the router 30, and the policy server 22 by using, for example, COPS-PR.
Further, the policy server 22 may transmit the updated policy directly to the router 30 without the intermediation of the proxy server 26.
In this case, the policy server 22 transmits the updated policy to the proxy server 26 as well.
In Step 520 (S520), the proxy server 26 transmits the packet containing the receipt confirmation transmitted from the mobile terminal 12 in Step S506 to the application server 24 as the transmission request destination of the packet.

In Step 218 (S218), the application server 24 transmits the packet containing a success response to the mobile terminal 12.
In Step 220 (S220), the transmission of the transmission data is performed between the mobile terminal 12 and the application server 24, and real-time communications for the application processing are performed in the required transmission quality.
Note that as has already been described with regard to the first data transmission system 1 by referring to FIG. 9, the judgment as to whether or not to update the policy and the processing of the update request of Steps S508 and the subsequent steps do not necessarily require the reception of the packet containing the "PRACK" code as a trigger.
As has been described above, the acquisition of the information necessary for the judgment and the request is already finished at the stage of Step S502 of capturing the packet of Step S500 for requesting the start. As has also been described above, Steps S502, S204, S506, and the like can be started at an appropriate time point in consideration of various conditions required by individual systems to be implemented or given as constraints therefor.
It should be noted that even in the implementation that does not involve issuance of "PRACK", the processing may be started with other events as a trigger, so the presence/absence of the "PRACK" does not affect the nature of the present invention at all.

Next, description will be made of an operation of the second data transmission system 2 in the case where the policy update is not necessary.

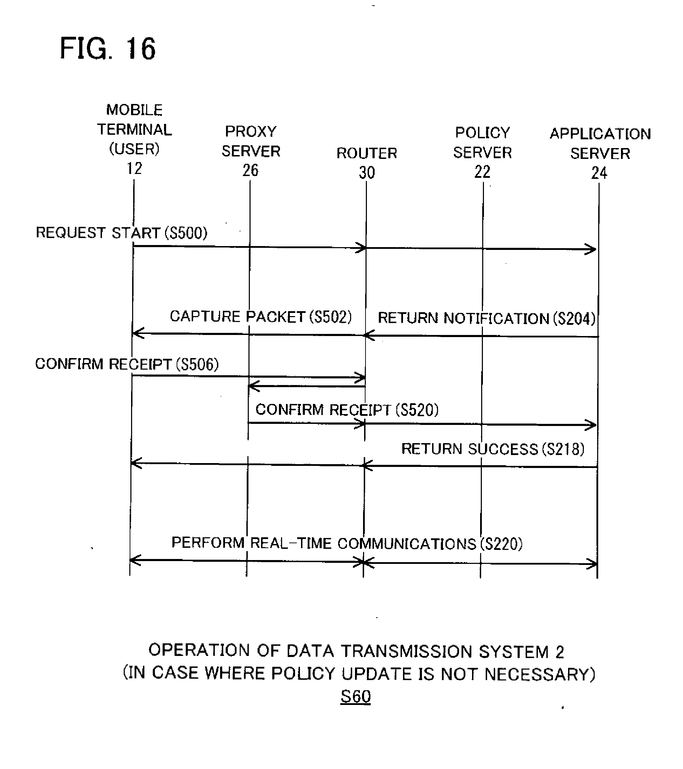

FIG. 16 is a second sequence diagram showing an operation (S60) of the second data transmission system 2 shown in FIG. 11 in a case where a policy update is not necessary.
As shown in FIG. 16, in Step 506 (S506), the proxy server 26 performs the transmission control method setting processing (FIG. 14; S40) . If it is determined resultingly that a necessary QoS can be secured without a policy update, Steps S508 to S518 (FIG. 15; S50) are not performed.

As described above, according to the second data transmission system 2 shown as the second embodiment, as to the router, a general router allowing for performing QoS control can be used without the need for a router designed specially for the present invention.
The present invention can be carried out merely by adding the proxy server as described above to this structure.
A router is more expensive than the proxy server. In addition, to apply the present invention to an existing network, a structure requiring a special router interrupts traffic necessary to pass through the router entirely for a predetermined time period while the router is being replaced. However, if a router of a type currently used in general is used as the router of the second embodiment, the only necessary operation is to change settings of the router at most. This produces an effect in that it is possible to reduce an influence exerted on the network at the time of application of the present invention to a minimum.

### (Modified Example of Second Data Transmission System 2)

Hereinafter, description will be made of a modified example of the second data transmission system 2.

### (Change of Trigger for starting Processing of Proxy Server 26)

FIGS . 17 and 18 are a third sequence diagram and a fourth sequence diagram which show operations (S62 and S64) of the second data transmission system 2 shown in FIG. 11, respectively.

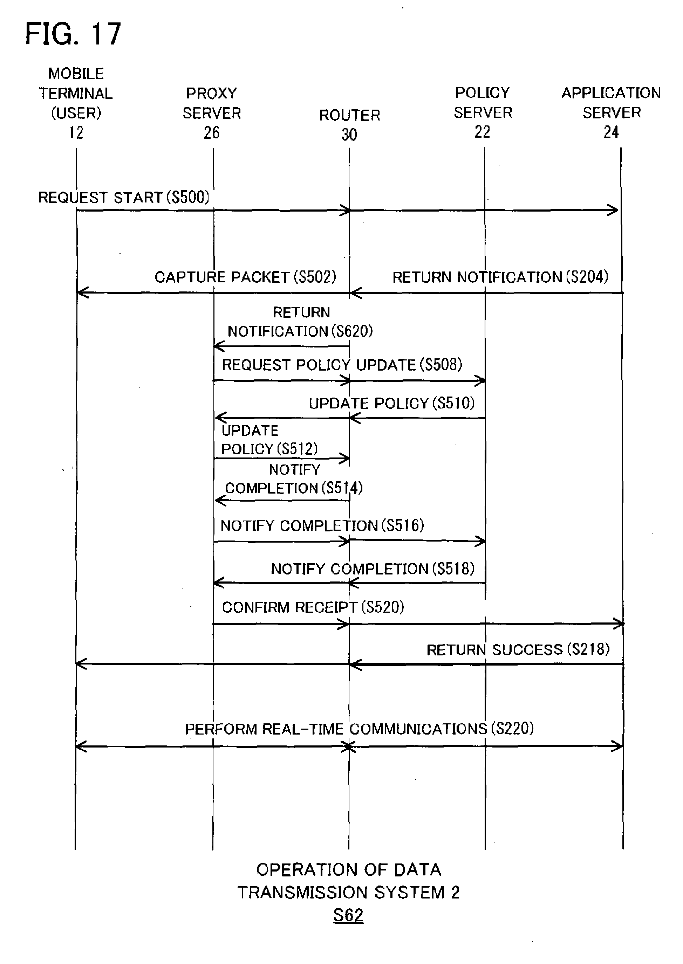

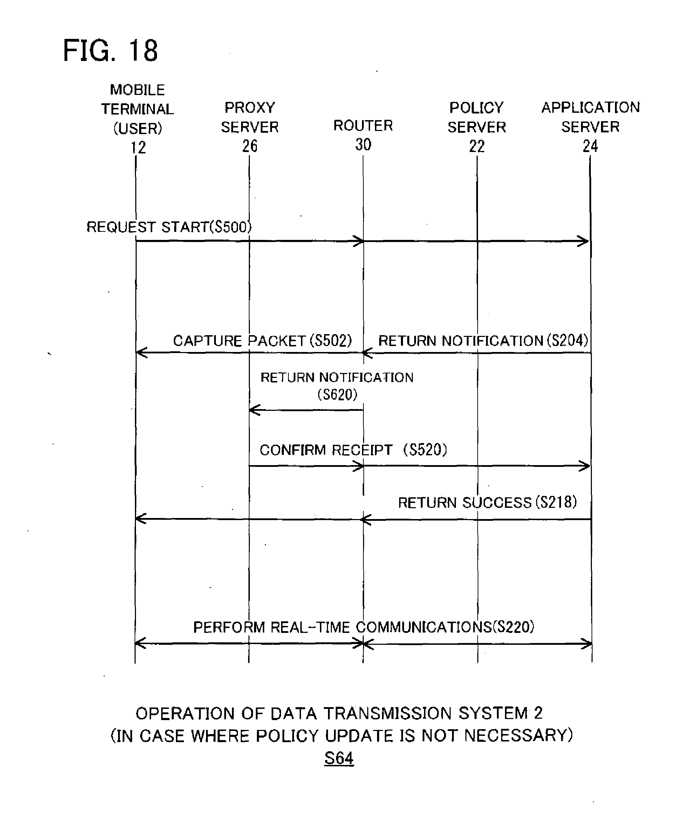

FIGS. 15 and 16 show the case where the proxy server 26 of the second data transmission system 2 starts the transmission control method setting processing with the reception of a receipt notification from the mobile terminal 12 as a trigger. However, as shown in FIGS. 17 and 18, it is also possible to change the operation of the proxy server 26 so as to start the transmission control method setting processing with the reception of a notification response relayed from the router 30 as a trigger.

As shown in FIG. 17, each node of the data transmission system 2 performs Steps S500 to S204 shown in FIG. 15.
In Step 620 (S620), the router 30 relays the notification response obtained in Step S204 to the proxy server 26, and the proxy server 26 receives the relayed notification response and executes Steps S508 to S520 with the notification response as a trigger.
In Steps S218 and S220, the application server 24 transmits the packet containing a success response to the mobile terminal 12, and the transmission of the transmission data is performed between the mobile terminal 12 and the application server 24.
Further, as shown in FIG. 18, the transmission control method setting processing (FIG. 14; S40) is performed with the reception of the notification response performed in Step 620 (S620) asatrigger. If it is determined resultingly that a necessary QoS can be secured without a policy update, Steps S508 to S518 (FIGS. 15 and 17) are not performed as in the operation shown in FIG. 16.

### (Change of Transmission Control Method Setting Processing of Proxy Server 26)

Hereinafter, description will be made of changing of the transmission control method setting processing of the proxy server 26.

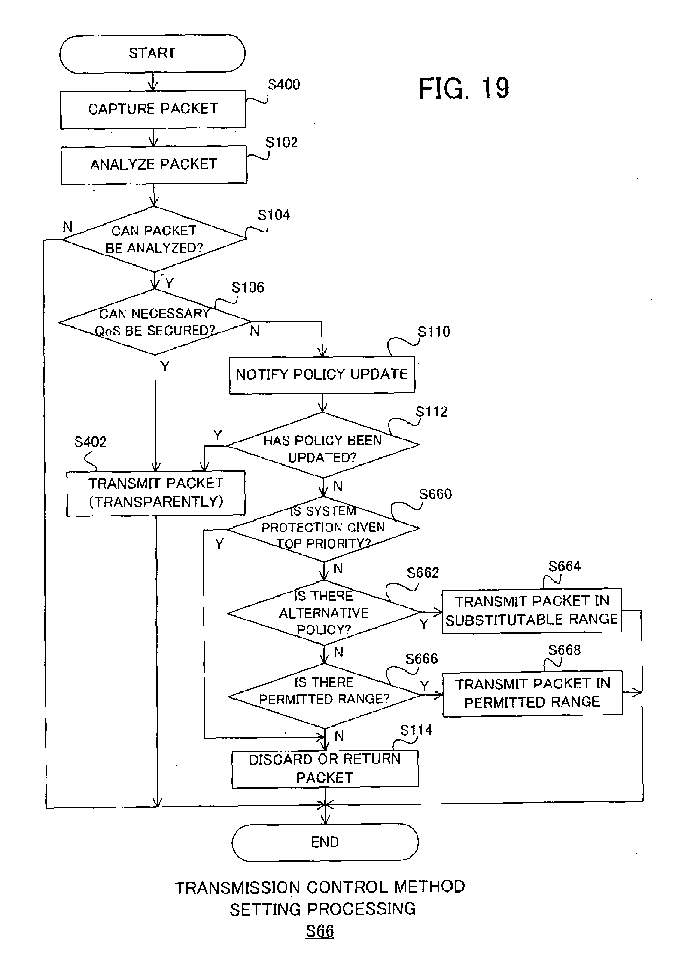

FIG. 19 is a flowchart showing a second transmission control method setting processing (S66) of the proxy server 26 shown in FIG. 11 (transmission control method setting program 260; FIG. 12).
The processing S66 shown in FIG. 19 is different from the processing S40 shown in FIG. 14 in that Steps S660 to S672 is added between Steps S112 and S114.
To perform the processing S66, settings for each component of the transmission control method setting program 260 and operations thereof are appropriately changed unlike the case of performing the processing S40.

As shown in FIG. 19, if it is determined in Step S112 that there is no update in the policy, the judgment section 214 determines in Step 660 (S660) whether or not such a setting that the data transmission system 2 is to be protected on top priority has been received.
If it is determined that the data transmission system 2 is to be protected on top priority, the proxy server 26 advances to Step S670, and otherwise advances to Step S662.
In Step 662 (S662), in a case where not the requested policy but an alternative policy that can substitute the requested policy is returned from the policy server 22, and if the requested service can be provided according to the alternative policy, the transmission control method setting program 260 advances to Step S664, and otherwise advances to Step S666.

In Step 664 (S664), the update section 216 sets the alternative policy in the policy DB 264, and controls the router 30 so as to transmit the packet according to the alternative policy.
In Step 666 (S666), the judgment section 214 is set to be able to change a policy within a predetermined range as necessary even if the policy is not obtained from the policy server 22 and determines whether or not the service can be provided according to the policy within a permitted range.
If the policy can be changed, the transmission control method setting program 260 advances to Step S668, and otherwise advances to Step S114.
Note that the policy change within the predetermined range permitted by the judgment section 214 is described herein as the processing performed in the case where the policy server 22 rejects the policy change. However, it is also possible to reverse the order thereof.
That is, such a structure can be employed that while determining in Step S106 whether or not the necessary QoS can be secured, if the QoS cannot be secured according to the current policy settings, the judgment section 214 performs the policy change within the predetermined permitted range, and if the QoS can thereby be secured, the processing advances to Step S402 by determining that the judgment of Step S106 has resulted in success.
In this case, only when the above-mentioned local processing within the proxy server 26 is not sufficient, the policy change at a higher level by the policy server 22 is requested.
In Step 668 (S668), the update section 216 uses the policy within the permitted range to set the policy DB 264, and also controls the router 30 to transmit the packet according to the policy within the permitted range.

Hereinafter, description will be given of an operation of the data transmission system 2 in which the transmission control method setting processing of the proxy server 26 is changed as shown in FIG. 19.

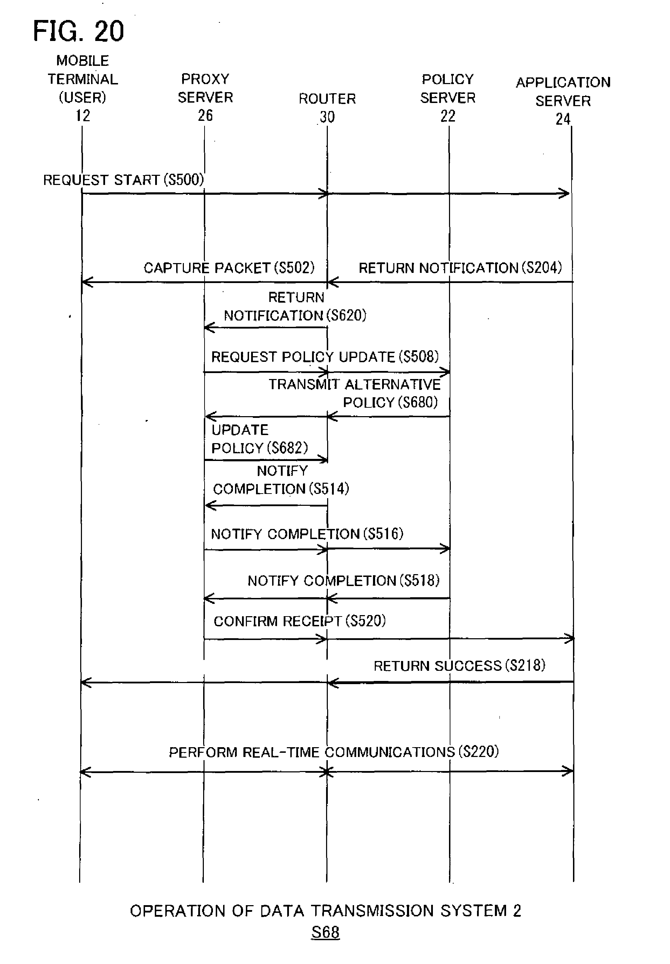

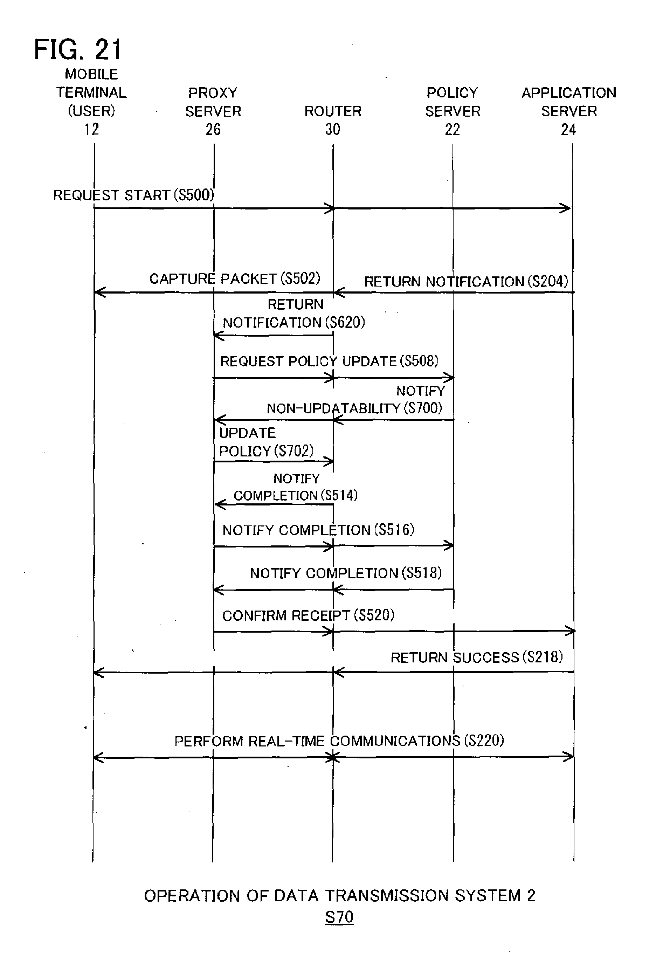

FIGS. 20 and 21 are a fifth sequence diagram and a sixth sequence diagram which show operations (S68 and S70) of the second data transmission system 2 shown in FIG. 11, respectively.
As shown in FIG. 20, in Step S508, a policy change request is sent from the proxy server 26 to the policy server 22 in the same manner as the operations S50 and S62 shown in FIGS. 15 and 17, respectively.
In Step 680 (S680), the alternative policy is returned from the policy server 22 in response to the policy change request, and then the proxy server 26 receives the policy.
In Step 682 (S682), the proxy server 26 updates the policy DB 2 64 with the alternative policy, and also transmits the alternative policy to the router 30.

Further, as shown in FIG. 21, in Step S508, the policy change request is sent from the proxy server 26 to the policy server 22 in the same manner as the operations S50, S62, and S68 shown in FIGS. 15, 17, and 20, respectively.
In Step 700 (S700), a notification indicating that the policy update is impossible is returned from the policy server 22 to the proxy server 26 in response to the policy change request.
In Step 702 (S702), if it is allowed to change the policy within a predetermined range, the proxy server 26 updates the policy DB 264 with the policy optimum for providing the service within the permitted range, and also transmits the policy to the router 30.

### Industrial Applicability

The present invention is applicable to policy-based quality control of a service performed in a communication system.

### Description of Reference Numerals

1 ... data transmission system
12 ... mobile terminal
104 ... CPU
106 ... memory
108 ... apparatus main body
110 ... display/input device
112 ... communication interface (IF)
114 ... storage device
116 ... recording medium
180 ... mobile network
20 ... router
200 ... control program
202 ... UI section
204 ... communication/encryption processing section
206 ... reception section
208 ... transmission control section
210 ... relay transmission section
212 ... setting section
214 ... judgment section
216 ... update section
282 ... policy DB
290 ... transmission control method setting section
292 ... transmission control method updating section
22 ... policy server
220 ... management program
222 ... management section
224 ... transmission section
286 ... policy DB
24 ... application server
240 ... application program
242 ... application processing section
244 ... attribute information notifying section
280 ... application network
2 ... data transmission system
26 ... proxy server
260 ... transmission control method setting program
262 ... capture section
264 ... transparent transmission section
294 ... transmission control method updating section
284 ... policy DB
30 ... router
300 ... transmission control program

FIG. 1
   - 1: DATA TRANSMISSION SYSTEM
   - 12-1 to 12-n: MOBILE TERMINAL
   - 20: ROUTER
   - 22: POLICY SERVER
   - 24: APPLICATION SERVER
   - 180: MOBILE NETWORK
   - 280: APPLICATION NETWORK
FIG. 2
   - 12: MOBILE TERMINAL
   - 20: ROUTER
   - 22, 24: SERVER
   - 106: MEMORY
   - 108: APPARATUS MAIN BODY
   - 110: DISPLAY/INPUT DEVICE
   - 112: COMMUNICATION IF
   - 114: STORAGE DEVICE
   - 116: RECORDING MEDIUM
   - 180: MOBILE NETWORK
   - 280: APPLICATION NETWORK
FIG. 3
   - 110: DISPLAY/INPUT DEVICE
   - 180: MOBILE NETWORK
   - 200: CONTROL PROGRAM
   - 204: COMMUNICATION/ENCRYPTION PROCESSING
   - 206: RECEPTION
   - 208: TRANSMISSION CONTROL
   - 210: RELAY TRANSMISSION
   - 212: SETTING
   - 214: JUDGMENT
   - 216: UPDATE
   - 280: APPLICATION NETWORK
   - 282: POLICY DB
   - 290: TRANSMISSION CONTROL METHOD SETTING
   - 292: TRANSMISSION CONTROL METHOD UPDATING
FIG. 4 (a)
   - (1): IP HEADER
   - (2): TCP OR UDP HEADER
   - (3): SIP MESSAGE
FIG. 4 (b)
   - (1): INITIAL LINE
   - (2): HEADER
   - (3): MESSAGE BODY
FIG. 5
   - 282: POLICY DATABASE
   - (1): POLICY ID
   - (2): DETAILS
   - (3): BANDWIDTH FROM MOBILE TERMINAL TO APPLICATION SERVER BE 64 Kbps AT MAXIMUM
   - (4): BANDWIDTH FROM APPLICATION SERVER TO MOBILE TERMINAL BE 2 Mbps AT MAXIMUM
   - (5): NUMBER OF CONNECTIONS BETWEEN MOBILE TERMINAL AND APPLICATION SERVER BE 2 AT MAXIMUM
   - (6): DELAY TIME FROM MOBILE TERMINAL TO APPLICATION SERVER BE 15 msec OR LESS
   - (7): DELAY TIME FROM APPLICATION SERVER TO MOBILE TERMINAL BE 15 msec OR LESS
FIG. 6
   - 110: DISPLAY/INPUT DEVICE
   - 204: COMMUNICATION/ENCRYPTION PROCESSING
   - 220: MANAGEMENT PROGRAM
   - 222: MANAGEMENT
   - 224: TRANSMISSION
   - 280: APPLICATION NETWORK
   - 286: POLICY DB
FIG. 7
   - 110: DISPLAY/INPUT DEVICE
   - 180: MOBILE NETWORK
   - 204: COMMUNICATION/ENCRYPTION PROCESSING
   - 240: APPLICATION PROGRAM
   - 242: APPLICATION PROCESSING
   - 244: ATTRIBUTE INFORMATION NOTIFYING
   - 280: APPLICATION NETWORK
FIG. 8
   - S10: TRANSMISSION CONTROL METHOD SETTING PROCESSING
   - S100: RECEIVE PACKET
   - S102: ANALYZE PACKET
   - S104: CAN PACKET BE ANALYZED?
   - S106: CAN NECESSARY QoS BE SECURED?
   - S108: TRANSMIT (RELAY) PACKET
   - S110: NOTIFY POLICY UPDATE
   - S112: HAS POLICY BEEN UPDATED?
   - S114: DISCARD OR RETURN PACKET
   - (1): START
   - (2): END
FIG. 9
   - 12: MOBILE TERMINAL (USER)
   - 20: ROUTER
   - 22: POLICY SERVER
   - 24: APPLICATION SERVER
   - S20: OPERATION OF COMMUNICATION SYSTEM 1
   - S200, S202: REQUEST START
   - S204: RETURN NOTIFICATION
   - S206, S216: CONFIRM RECEIPT
   - S208: REQUEST POLICY UPDATE
   - S210: UPDATE POLICY
   - S212, S214: NOTIFY COMPLETION
   - S218: RETURN SUCCESS
   - S220: PERFORM REAL-TIME COMMUNICATIONS
FIG. 10
   - 12: MOBILE TERMINAL (USER)
   - 20: ROUTER
   - 22: POLICY SERVER
   - 24: APPLICATION SERVER
   - S30: OPERATION OF COMMUNICATION SYSTEM 1 (IN CASE WHERE POLICY UPDATE IS NOT NECESSARY)
   - S200, S202: REQUEST START
   - S204: RETURN NOTIFICATION
   - S206, S216: CONFIRM RECEIPT
   - S218: RETURN SUCCESS
   - S220: PERFORM REAL-TIME COMMUNICATIONS
FIG. 11
   - 2: DATA TRANSMISSION SYSTEM
   - 12-1 to 12-n: MOBILE TERMINAL
   - 22: POLICY SERVER
   - 24: APPLICATION SERVER
   - 26: PROXY SERVER
   - 30: ROUTER
   - 180: MOBILE NETWORK
   - 280: APPLICATION NETWORK
FIG. 12
   - 110: DISPLAY/INPUT DEVICE
   - 204: COMMUNICATION/ENCRYPTION PROCESSING
   - 212: SETTING
   - 214: JUDGMENT
   - 216: UPDATE
   - 260: TRANSMISSION CONTROL METHOD SETTING PROGRAM
   - 262: CAPTURE
   - 264: TRANSPARENT TRANSMISSION
   - 280: APPLICATION NETWORK
   - 284: POLICY DB
   - 294: TRANSMISSION CONTROL METHOD UPDATING
FIG. 13
   - 110: DISPLAY/INPUT DEVICE
   - 180: MOBILE NETWORK
   - 204: COMMUNICATION/ENCRYPTION PROCESSING
   - 208: TRANSMISSION CONTROL
   - 212: SETTING
   - 280: APPLICATION NETWORK
   - 282: POLICY DB
   - 300: TRANSMISSION CONTROL PROGRAM
FIG. 14
   - S40: TRANSMISSION CONTROL METHOD SETTING PROCESSING
   - S102: ANALYZE PACKET
   - S104: CAN PACKET BE ANALYZED?
   - S106: CAN NECESSARY QoS BE SECURED?
   - S110: NOTIFY POLICY UPDATE
   - S112: HAS POLICY BEEN UPDATED?
   - S114: DISCARD OR RETURN PACKET
   - S400: CAPTURE PACKET
   - S402: TRANSMIT PACKET (TRANSPARENTLY)
   - (1): START
   - (2): END
FIG. 15
   - 12: MOBILE TERMINAL (USER)
   - 22: POLICY SERVER
   - 24: APPLICATION SERVER
   - 26: PROXY SERVER
   - 30: ROUTER
   - S50: OPERATION OF DATA TRANSMISSION SYSTEM 2
   - S204: RETURN NOTIFICATION
   - S218: RETURN SUCCESS
   - S220: PERFORM REAL-TIME COMMUNICATIONS
   - S500: REQUEST START
   - S502: CAPTURE PACKET
   - S506, S520: CONFIRM RECEIPT
FIG. 16
   - 12: MOBILE TERMINAL (USER)
   - 22: POLICY SERVER
   - 24: APPLICATION SERVER
   - 26: PROXY SERVER
   - 30: ROUTER
   - S60: OPERATION OF DATA TRANSMISSION SYSTEM 2 (IN CASE WHERE POLICY UPDATE IS NOT NECESSARY)
   - S204: RETURN NOTIFICATION
   - S218: RETURN SUCCESS
   - S220: PERFORM REAL-TIME COMMUNICATIONS
   - S500: REQUEST START
   - S502: CAPTURE PACKET
   - S506, S520: CONFIRM RECEIPT
FIG. 17
   - 12: MOBILE TERMINAL (USER)
   - 22: POLICY SERVER
   - 24: APPLICATION SERVER
   - 26: PROXY SERVER
   - 30: ROUTER
   - S62: OPERATION OF DATA TRANSMISSION SYSTEM 2
   - S204, S620: RETURN NOTIFICATION
   - S218: RETURN SUCCESS
   - S220: PERFORM REAL-TIME COMMUNICATIONS
   - S500: REQUEST START
   - S502: CAPTURE PACKET
   - S508: REQUEST POLICY UPDATE
   - S510, S512: UPDATE POLICY
   - S514, S516, S518: NOTIFY COMPLETION
   - S520: CONFIRM RECEIPT
FIG. 18
   - 12: MOBILE TERMINAL (USER)
   - 22: POLICY SERVER
   - 24: APPLICATION SERVER
   - 26: PROXY SERVER
   - 30: ROUTER
   - S64: OPERATION OF DATA TRANSMISSION SYSTEM 2 (IN CASE WHERE POLICY UPDATE IS NOT NECESSARY)
   - S204, S620: RETURN NOTIFICATION
   - S218: RETURN SUCCESS
   - S220: PERFORM REAL-TIME COMMUNICATIONS
   - S500: REQUEST START
   - S502: CAPTURE PACKET
   - S520: CONFIRM RECEIPT
FIG. 19
   - S66: TRANSMISSION CONTROL METHOD SETTING PROCESSING
   - S102: ANALYZE PACKET
   - S104: CAN PACKET BE ANALYZED?
   - S106: CAN NECESSARY QoS BE SECURED?
   - S110: NOTIFY POLICY UPDATE
   - S112: HAS POLICY BEEN UPDATED?
   - S114: DISCARD OR RETURN PACKET
   - S400: CAPTURE PACKET
   - S402: TRANSMIT PACKET (TRANSPARENTLY)
   - S660: IS SYSTEM PROTECTION GIVEN TOP PRIORITY?
   - S662: IS THERE ALTERNATIVE POLICY?
   - S664: TRANSMIT PACKET IN SUBSTITUTABLE RANGE
   - S666: IS THERE PERMITTED RANGE?
   - S668: TRANSMIT PACKET IN PERMITTED RANGE
   - (1): START
   - (2): END
FIG. 20
   - 12: MOBILE TERMINAL (USER)
   - 22: POLICY SERVER
   - 24: APPLICATION SERVER
   - 26: PROXY SERVER
   - 30: ROUTER
   - S68: OPERATION OF DATA TRANSMISSION SYSTEM 2
   - S204, S620: RETURN NOTIFICATION
   - S218: RETURN SUCCESS
   - S220: PERFORM REAL-TIME COMMUNICATIONS
   - S500: REQUEST START
   - S502: CAPTURE PACKET
   - S508: REQUEST POLICY UPDATE
   - S514, S516, S518: NOTIFY COMPLETION
   - S520: CONFIRM RECEIPT
   - S680: TRANSMIT ALTERNATIVE POLICY
   - S682: UPDATE POLICY
FIG. 21
   - 12: MOBILE TERMINAL (USER)
   - 22: POLICY SERVER
   - 24: APPLICATION SERVER
   - 26: PROXY SERVER
   - 30: ROUTER
   - S70: OPERATION OF DATA TRANSMISSION SYSTEM 2
   - S204, S620: RETURN NOTIFICATION
   - S218: RETURN SUCCESS
   - S220: PERFORM REAL-TIME COMMUNICATIONS
   - S500: REQUEST START
   - S502: CAPTURE PACKET
   - S508: REQUEST POLICY UPDATE
   - S514, S516, S518: NOTIFY COMPLETION
   - S520: CONFIRM RECEIPT
   - S700: NOTIFY NON-UPDATABILITY
   - S702: UPDATE POLICY

## Claims

1. A transmission control apparatus for controlling transmission of transmission data intended to be transmitted, attribute information representing an attribute of the transmission data being previously notified from a transmission request source of the transmission data to be transmitted to a transmission request destination thereof in advance of transmission of the transmission data, the transmission control apparatus comprising:
a transmission control mode setting section for setting a transmission control mode for transmitting the transmission data in a transmission quality required for the transmission data corresponding to the attribute information in response to the notified attribute information; and
a transmission control section for performing transmission control of the transmission data corresponding to the attribute information according to the set transmission control mode.

2. The transmission control apparatus according to claim 1,
wherein the attribute information is contained and transferred in a predetermined packet,
further comprising a transmission section for transmitting the packet containing the attribute information to the transmission request destination if it is determined that the transmission data can be transmitted in the required transmission quality according to the transmission control mode which has originally been set.

3. The transmission control apparatus according to claim 1, wherein:
the attribute information is contained and transferred in a predetermined packet; and
notification of the attribute information is performed by acquisition of a copy of the predetermined packet during the transmission.

4. The transmission control apparatus according to claim 1, wherein the transmission control mode setting section comprises:
a determination section for determining based on the notified attribute information whether or not the transmission data can be transmitted in the required transmission quality according to the transmission control mode which has originally been set;
an update section for updating the transmission control mode so that the transmission data is transmitted in the transmission quality required for the transmission data, if it is determined that the transmission data cannot be transmitted in the required transmission quality according to the transmission control mode which has originally been set; and
a setting section for setting the updated transmission control mode to the transmission control section when the transmission control mode is updated.

5. The transmission control apparatus according to claim 4, wherein:
the transmission control mode is a policy representing a criterion of transmission quality;
the transmission control mode setting section sets the policy based on the notified attribute information so that the transmission data is transmitted in the transmission quality required for the transmission data corresponding to the attribute information;
the setting section sets the updatedpolicy to the transmission control section as the transmission control mode; and
the transmission control section performs the transmission control of the transmission data corresponding to the attribute information according to the policy set as the transmission control mode.

6. The transmission control apparatus according to claim 5, wherein:
the policy includes at least one of bandwidth, number of connections, and delay time as the criterion of transmission quality; and
the transmission control section performs the transmission control so that at least one criterion included in the policy out of the bandwidth, the number of connections, and the delay time is satisfied.

7. The transmission control apparatus according to claim 1, wherein portion of the transmission control apparatus is disposed within a router located between the transmission request source and the transmission request destination.

8. The transmission control apparatus according to claim 1, wherein portion of the transmission control apparatus is disposed within a proxy server located between the transmission request source and the transmission request destination.

9. A transmission control method of controlling transmission of transmission data intended to be transmitted, attribute information representing an attribute of the transmission data being notified from a transmission request source of the transmission data to be transmitted to a transmission request destination thereof in advance of the transmission of the transmission data,
the transmission control method comprising the steps of:
setting a transmission control mode for transmitting the transmission data in a transmission quality required for the transmission data corresponding to the attribute information in response to the notified attribute information; and
performing transmission control of the transmission data corresponding to the attribute information according to the set transmission control mode.

10. The transmission control method according to claim 9, wherein the step of setting a transmission control mode comprises the steps of:
determining based on the notified attribute information whether or not the transmission data can be transmitted in the required transmission quality according to the transmission control mode which has originally been set; and
updating the transmission control mode so that the transmission data can be transmitted in the transmission quality required for the transmission data, if it is determined that the transmission data cannot be transmitted in the required transmission quality according to the transmission control mode which has originally been set.
